# EUROPÄISCHE PATENTSCHRIFT

(11) **EP 2 070 421 B1**
(45) Veröffentlichungstag und Bekanntmachung des Hinweises auf die Patenterteilung: **14.09.2016**
(21) Anmeldenummer: 08021049.5
(22) Anmeldetag: 04.12.2008
(51) Int. Cl.: A23D 7/005, A23D 7/01, A23D 9/007, A23D 9/013, C11B 5/00

(54) **EIN LIPOPHILES ANTIOXIDANS**
A LIPOPHILIC ANTIOXIDANT
ANTIOXYDANT LIPOPHILE

(30) Priorität: 13.12.2007 EP 07024183
(43) Veröffentlichungstag der Anmeldung: 17.06.2009
(73) Patentinhaber: Cognis IP Management GmbH, 40589 Dusseldorf (DE)
(72) Erfinder: Müller, Michael, 89165 Dietenheim (DE); Horlacher, Peter, 89287 Bellenberg (DE); Beck, Katja, 89287 Bellenberg (DE)
(74) Vertreter: BASF IP Association

(56) Entgegenhaltungen:
- AU-B2- 784 481
- US-A1- 2003 054 082
- US-A1- 2005 123 667
- US-A1- 2007 087 104
- DATABASE FSTA [Online] INTERNATIONAL FOOD INFORMATION SERVICE (IFIS), FRANkFURT-MAIN, DE; 2000, JIANG S T ET AL: "Antioxidative effects of tea polyphenols and lard emulsion system." XP002481944 Database accession no. 2000-00-t0170 & JIANG S.T.; PAN L.J.; PEN S.P.; ZHENG Z.: "Antioxidative effects of tea polyphenols and lard emulsion system." FOOD SCIENCE, Bd. 20, Nr. 5, 1999, Seiten 9-11, CHINA
- ANONYMOUS: "HLB Systems" INTERNET ARTICLE, [Online] 24. Juli 2001 (2001-07-24), XP002481943 Gefunden im Internet: URL:http://web.archive.org/web/20010724180 753/http://pharmcal.tripod.com/ch17.htm> [gefunden am 2008-05-27]
- LUCZAJ W ET AL: "Antioxidative properties of black tea" PREVENTIVE MEDICINE, ACADEMIC PRESS, XX, Bd. 40, Nr. 6, 1. Juni 2005 (2005-06-01), Seiten 910-918, XP004863229 ISSN: 0091-7435
- HUANG S-W ET AL: "ANTIOXIDANT ACTIVITY OF CARNOSIC ACID AND METHYL CARNOSATE IN BULK OILS AND OIL-IN-WATER EMULSIONS" JOURNAL OF AGRICULTURAL AND FOOD CHEMISTRY, AMERICAN CHEMICAL SOCIETY. WASHINGTON, US, Bd. 44, Nr. 10, 1. Oktober 1996 (1996-10-01), Seiten 2951-2956, XP000626817 ISSN: 0021-8561
- HUANG S-W ET AL: "ANTIOXIDANT ACTIVITY OF TEA CATECHINS IN DIFFERENT LIPID SYSTEMS" JOURNAL OF AGRICULTURAL AND FOOD CHEMISTRY, AMERICAN CHEMICAL SOCIETY. WASHINGTON, US, Bd. 45, Nr. 8, 1. August 1997 (1997-08-01), Seiten 3033-3038, XP000696348 ISSN: 0021-8561

## Beschreibung

Die vorliegende Erfindung betrifft eine Zusammensetzung enthaltend eine erste Komponente ausgewählt aus der Gruppe bestehend aus mindestens einem Polyphenol, mindestens einem phenolischen Diterpen und Mischungen beider, mindestens ein Glycerid, mindestens einen hydrophilen Emulgator und mindestens einen hydrophoben Emulgator sowie die Verwendung dieser Mischung als lipophiles Antioxidans.

Üblicherweise werden Tocopherole und Ascorbylpalmitat benutzt, um zum Beispiel Öle enthaltend Fettsäuren mit mindestens einer Doppelbindung gegen Oxidation zu schützen.

Catechine sind Naturstoffe, die in der Natur als Pflanzeninhaltsstoffe vorkommen. Sie sind als hydrierte Flavone aufzufassen. Zu den Catechinen gehören insbesondere das Catechin, das Epicatechin, das Gallocatechin und das Epigallocatechin. Im Sinne der vorliegenden Erfindung bedeutet "Catechin" oder "ein Catechin" stets eine Verbindung ausgewählt aus der Gruppe der Catechine. Mit "Catechin" ist nicht das Catechin im engeren Sinne gemeint. Wenn das Catechin im engeren Sinne gemeint ist, dann wird dieses auch als "Catechin im engeren Sinne" bezeichnet. Catechine kommen beispielsweise in grünem Tee vor und können aus diesem extrahiert werden. Getrocknete Blätter des grünen Tees können z.B. 8,5 bis 20,6 Gew.-% Catechine enthalten. Informationen zu Catechinen und zu Catechinen im grünen Tee finden sich z.B. in **Römpp Online, Version 3.0,** herausgegeben vom Georg Thieme Verlag, unter den Stichworten "Catechine" und "Tee".

Catechine sind wirkungsvolle Antioxidantien und haben auch andere positive Eigenschaften. Allerdings sind Catechine hydrophil und können deshalb nicht ohne weiteres als Antioxidantien in lipophilen Medien verwendet werden. Es ist deshalb wünschenswert, Catechine als Antioxidantien für lipophile Medien verfügbar zu machen.

Catechine sind gut wasserlösliche aber sehr schlecht öllösliche Antioxidationsmittel. Neuere wissenschaftliche Untersuchungen belegen zudem gesundheitsfördernde Eigenschaften der Catechine wie z.B. beschleunigte Fettverbrennung, anticarcinogene Wirkung usw. Die Ölunlöslichkeit beschränkt die Formulierbarkeit der Catechine auf wässrige Systeme, was ihren Einsatz als Additive für Öle oder eine Abmischung von Ölen unterbindet.

Über die Catechine hinaus sind auch Polyphenole allgemein, insbesondere solche mit antioxidativen Eigenschaften, als Antioxidantien einsetzbar. Es ist deshalb wünschenswert, nicht nur Catechine, sondern Polyphenole allgemein als Antioxidantien auch in lipophilen Medien einsetzen zu können.

Gäbe es einen Weg, Polyphenole, insbesondere Catechine, in entsprechender Menge stabil in Öle einzuarbeiten, so könnte man sich nicht nur die sehr gute Antioxidationskraft der Polyphenole für Öle nutzbar machen, es ließen sich auch die gesundheitsfördernde Wirkung der Polyphenole mit derjenigen von Ölen bzw. von Ölformulierungen verbinden. Vorzugsweise sollten die Formulierungen frei von kurzkettigen und mittelkettigen Alkoholen sein.

Diterpene sind aus vier Isopren-Einheiten aufgebaute Naturstoffe mit 20 Kohlenstoffatomen. Sie gehören zur Gruppe der Terpene. Als Diterpene werden nicht nur Kohlenwasserstoffe bezeichnet sondern auch Derivate der entsprechenden Kohlenwasserstoffe. Phenolische Diterpene sind solche Diterpene, die mindestens eine phenolische OH-Gruppe enthalten. Carnosolsäure gehört zu den phenolischen Terpenen.

WO 94/22321 offenbart Lösungen von Catechinen in nicht ionischen Lösungsmitteln. Diese Lösungen können als Antioxidantien in Fetten und Ölen eingesetzt werden. Als Lösungsmittel werden insbesondere nicht ionische Tenside offenbart, insbesondere werden Lecithin und Fettalkohole mit 8-18 C-Atomen offenbart. In Beispiel 7 wird unter anderem auch Glycerinmonooleat als Lösungsmittel offenbart. Allerdings hat dieses den Nachteil, dass Catechine nur in geringer Konzentration darin löslich sind und dass häufig trübe Öle erhalten werden.

KR 2001079020 und JP-A 63135483 offenbaren ebenfalls lipophile Antioxidantien, die Catechine enthalten.

Food Science Band 20, Nr 5, 1999, Seiten 9 bis 11 offenbart Untersuchungen zum antioxidativen Effekt von Polyphenolen aus Tee und Speck-Emulsionsystemen.

AU 784481 B2 offenbart essbare Fettemulsionen mit niedrigeren Fettgehalten im Vergleich zu konventionellen Emulsionen sowie eine Herstellmethode dazu. Solche Fettemulsionen weisen ein essbares Fett oder Öl auf mit einem Anteil von bis zu 5 Gewichtsprozent und eine Emulgatorsystem, das ein Zwei- oder Mehr-Komponenten-System ist umfassend einen ersten Emulgator enthaltend ein oder mehrere Komponenten ausgewählt aus Proteinen, Magermilchpulver, Polysorbate, DATEM, CITREM, Sucroseester, Octenylsuccinsäuremodifizierte Stärken sowie Gum Arabic, sowie eine zweite Emulgatorkomponente ausgewählt aus einer oder mehrerer Komponenten ausgewählt aus Mono- und Diglyceriden, Polysorbaten, Polyglycerolestern, Estern organischer Säuren mit Mono- und Diglyceriden, Propylenglycolestern, Stearyl-Milchsäureestern. Lecithin und Sucrose- Fettsäureestern.

US2005/123667A1 offenbart Öl -/Fettpulver enthaltend Glyceridmischungen mit 5 bis 84,9 Gewichtsprozent Triglyceriden, 0,1 bis 5 Gewichtsprozent Monoglyceriden und 15 bis 94.9 Gewichtsprozent Diglyceriden, wobei die Fettsäuren zu wenigstens 50 Gewichtsprozent bezogen auf alle Fettsäuren ungesättigt sind. Beispiel 6 in Tabelle 3 offenbart eine Zusammensetzung enthaltend 0,3 Prozent eines Catechins, 2,8 Prozent Triglyceride aus Soja, 1,2 Prozent eines Zuckeresters, 1,4 Prozent Monoglyceride und 70 Prozent Wasser. Zusammensetzungen mit höheren Catechingehalten und deren Verwendung als Antioxidanz in Fett-/Öl-haltigen Lebensmitteln ist jedoch nicht offenbart.

US20031054082 offenbart Öl- oder Fettzusammensetzungen enthaltend Monoacylglycerol und/oder Diacylglycerol in einer Gesamtmenge von 5 bis 100 Gewichtsprozent mit einer bestimmten Oxidationsstabilität. Die Fettsäuren im Fett/Öl enthalten einen Anteil an Omega-3- Fettsäuren von 15 bis 90 Gewichtsprozent bezogen auf den Fettsäuregehalt. Die Oxidationsstabilität soll erreicht werden durch den Zusatz eines beliebigen Inhaltsstoffes mit entsprechenden Eigenschaften. Entsprechende Listen an Substanzen sind offenbart.

Der vorliegenden Erfindung lag die Aufgabe zu Grunde, als lipophile Antioxidantien einsetzbare Stoffe bereit zu stellen.

Diese Aufgabe wird gelöst durch eine Zusammensetzung enthaltend 1-20 Gew. % einer ersten Komponente ausgewählt aus der Gruppe bestehend aus mindestens einem Polyphenol (insbesondere einem Polyphenol mit antioxidativen Eigenschaften, bevorzugt mindestens einem Catechin), mindestens einem phenolischen Diterpen (bevorzugt Carnosolsäure) und Mischungen beider, 2-70 Gew. %

Glycerid, 3-60 Gew. % hydrophilen Emulgator, 3-60 Gew. % hydrophoben Emulgator und 0-30 Gew. % Wasser, wobei der hydrophile Emulgator ausgewählt ist aus der Gruppe bestehend aus DATEM, CITREM, LACTEM, ACETEM und einem Zuckerester. Diese erfindungsgemäße Zusammensetzung ist Gegenstand der vorliegenden Erfindung.

Eine besondere Ausführungsform der vorliegenden Erfindung ist die erfindungsgemäße Zusammensetzung, wobei die erste Komponente ein Catechin oder ein Gemisch von Catechinen ist und wobei dieses bevorzugt in Form eines Extraktes aus den Blättern des grünen Tees vorliegt. Eine weitere besondere Ausführungsform der vorliegenden Erfindung ist die erfindungsgemäße Zusammensetzung oder eine der besonderen, in den vorigen Absätzen genannten Zusammensetzungen, wobei die erste Komponente ein phenolisches Diterpen oder ein Gemisch von phenolischen Diterpenen, bevorzugt Carnosolsäure, ist.

Eine weitere besondere Ausführungsform der vorliegenden Erfindung ist die erfindungsgemäße Zusammensetzung oder eine der besonderen, in den vorigen Absätzen genannten Zusammensetzungen, wobei das Glycerid ein Triglycerid ist, dessen drei Fettsäurereste jeweils 6 bis 18 C-Atome haben.

Eine weitere besondere Ausführungsform der vorliegenden Erfindung ist die erfindungsgemäße Zusammensetzung oder eine der besonderen, in den vorigen Absätzen genannten Zusammensetzungen, wobei der hydrophile Emulgator ausgewählt ist aus der Gruppe bestehend aus DATEM, CITREM, LACTEM und ACETEM.

Eine weitere besondere Ausführungsform der vorliegenden Erfindung ist die erfindungsgemäße Zusammensetzung oder eine der besonderen, in den vorigen Absätzen genannten Zusammensetzungen, wobei der hydrophile Emulgator ein Zuckerester ist.

Eine weitere besondere Ausführungsform der vorliegenden Erfindung ist die erfindungsgemäße Zusammensetzung oder eine der besonderen, in den vorigen Absätzen genannten Zusammensetzungen, wobei der hydrophobe Emulgator ausgewählt ist aus der Gruppe bestehend aus einem Polyglycerolpolyricinoleat, einem Polyglycerolfettsäureester und Glycerinmonofettssäureester (d. h. einem Monoglycerid; insbesondere einem solchen mit einer Fettsäure mit 10 bis 30 C-Atomen, insbesondere Glycerinmonooleat oder Glycerinmonostearat). Eine weitere besondere Ausführungsform der vorliegenden Erfindung ist die erfindungsgemäße Zusammensetzung oder eine der besonderen, in den vorigen Absätzen genannten Zusammensetzungen, zusätzlich enthaltend Wasser.

Eine weitere besondere Ausführungsform der vorliegenden Erfindung ist die erfindungsgemäße Zusammensetzung oder eine der besonderen, in den vorigen Absätzen genannten Zusammensetzungen, enthaltend 5 bis 15 Gew.-%, der ersten Komponente, 20 bis 50 Gew.-% Glycerid, 15 bis 35 Gew.-% hydrophilen Emulgator, 15 bis 35 Gew.-% hydrophoben Emulgator und 0 bis 1 Gew.-% Wasser. Ein weiterer Gegenstand der vorliegenden Erfindung ist ein Verfahren zur Herstellung der erfindungsgemäßen Zusammensetzung oder einer der besonderen, in den vorigen Absätzen genannten Zusammensetzungen umfassend das Bereitstellen einer Mischung enthaltend den hydrophilen Emulgator und den hydrophoben Emulgator, optional das Erwärmen dieser Mischung auf eine Temperatur von mindestens 50°C, die Zugabe der ersten Komponenten zu dieser Mischung (optional unter Rühren) und danach die Zugabe des Glycerids.

Ein weiterer Gegenstand der vorliegenden Erfindung ist eine Verwendung der erfindungsgemäßen Zusammensetzung oder einer der besonderen, in den vorigen Absätzen genannten Zusammensetzungen als Antioxidans für lipophile Medien, wobei das lipophile Medium bevorzugt ein Öl oder ein Fett enthält und insbesondere ein Lebensmittel ist.

Weiterhin offenbart wird eine zweite Zusammensetzung enthaltend Öl oder Fett und, bezogen auf die Masse des Öls oder Fetts, 0,05 bis 3 Gew.-% der erfindungsgemäßen Zusammensetzung oder einer der besonderen, in den vorigen Absätzen genannten Zusammensetzungen.

Weiterhin offenbart wird eine Forme der genannten zweiten Zusammensetzung, wobei das Öl oder Fett ausgewählt ist aus der Gruppe bestehend aus einem Fett oder Öl, das ungesättigte Fettsäurereste enthält (insbesondere Reste der Linolsäure, Linolensäure oder Ölsäure), Fischöl, Sonnenblumenöl, Borretschöl, einem Glycerid, das Acylreste der konjugierten Linolsäure enthält und einem Triglycerid, dessen Acylreste 6 bis 24 C-Atome haben.

Die zuvor offenbarte zweite Zusammensetzung gemäß einem der vorigen Absätze ist bevorzugt eine Öl-in-Wasser Emulsion.

Eine weitere besondere Form der zweiten Zusammensetzung gemäß einem der vorigen Absätze ist ein Granulat oder ein Pulver.

Pulver im Sinne der vorliegenden Erfindung sind auch alle weiteren Formulierungen mit Feststoffcharakter, wie z.B. Granulate.

Eine weitere besondere Form der zweiten Zusammensetzung gemäß einem der vorigen Absätze ist ein Lebensmittel, insbesondere ein solches ausgewählt aus der Gruppe bestehend aus einem Öl, einem Fett, Olivenöl, Butter, Margarine, Milch, einem Milchprodukt, Käse, Joghurt, einem
Schokoriegel und einem Müsliriegel.

Gemäß der vorliegenden Erfindung kann der hydrophile Emulgator insbesondere ausgewählt werden aus der Gruppe bestehend aus DATEM, CITREM, LACTEM und ACETEM. Dabei ist DATEM ein Stoffgemisch enthaltend Mono- und Diacetylweinsäureester von Mono- und Diglyceriden von Speisefettsäuren, insbesondere ist DATEM ein Stoffgemisch das substituierte Glycerinmoleküle enthält, die an mindestens zwei OH-Gruppen verestert sind, und die mindestens einen Fettsäurerest tragen (mehr als 50 Mol-% der Fettsäurereste haben 16 oder 18 C-Atome), und die mindestens einen Weinsäurerest tragen, der wiederum einfach oder zweifach acetyliert ist.

CITREM ist ein Stoffgemisch enthaltend Zitronensäureester von Mono- und Diglyceriden von Speisefettsäuren. LACTEM ist ein Stoffgemisch enthaltend Milchsäureester von Mono- und Diglyceriden von Speisefettsäuren. ACETEM ist ein Stoffgemisch enthatlend Essigsäureester von Mono- und Diglyceriden von Speisefettsäuren. Speisefettsäuren haben insbesondere 6 bis 24 C-Atome.

Ein hydrophober Emulgator hat einen HLB-Wert von kleiner als 8, ein hydrophiler Emulgator hat einen HLB-Wert von mindestens 8. Der HLB-Wert kann für nicht-ionische Emulgatoren nach Griffin, für ionische Emulgatoren nach Davies bestimmt werden. Zur Bestimmung von HLB-Werten siehe: Tensid-Taschenbuch, 2. Ausgabe, herausgegeben von H. Stache, Carl Hanser Verlag, 1981.

Unter der Bezeichnung PGPR (Polyglycerinpolyricinoleat) werden Ester von polykondensierten Rizinusölfettsäuren mit polykondensiertem Glycerin zusammengefasst. Ricinolsäure ist 12-Hydroxyölsäure und kann mit sich selbst einen Polyester bilden. Ester von polykondensierten Rizinusölfettsäuren mit polykondensiertem Glycerin sind unter der Bezeichnung E 476 als Lebensmittelzusatzstoff in Deutschland zugelassen. Polyglycerolfettsäureester können zum Beispiel die Zusammensetzung des Handelsproduktes Polymuls^{®} 2G der Cognis GmbH, Monheim, Deutschland haben. Das ist eine Mischuung aus (% ist jeweils Gew.-%): Diglycerin-Monofettsäurester: 65 - 75 %, Glycerin-Monofettsäureester: 15 - 20 %, Glycerin-Difettsäureester: 5 - 10 %, Gesamtglycerine: 30 - 40 %, freie Glycerine: 2 - 5 %.

Ein Zuckerester im Sinne der vorliegenden Erfindung ist insbesondere ein Ester aus einem Molekül eines Zuckers ausgewählt aus der Gruppe bestehend aus Saccharose, Fructose Glucose und Trehalose (Saccharose ist bevorzugt) und ein bis drei Molekülen Speisefettsäure (bevorzugt eine Fettsäure mit 6 bis 24 C-Atomen).

Ein Glycerid im Sinne der vorliegenden Erfindung ist ein Ester des Glycerins mit ein, zwei oder drei Fettsäuren. Ein Monoglycerid ist dabei ein Ester des Glycerins mit einer Fettsäure, ein Diglycerid ist ein Ester des Glycerins mit zwei Fettsäuren und ein Triglycerid ist ein Ester des Glycerins mit drei Fettsäuren. Fettsäuren sind dabei bevorzugt Carbonsäuren mit 2 bis 30, insbesondere 2 bis 20, insbesondere 6 bis 18, insbesondere 8 bis 10 C-Atomen. Triglyceride sind erfindungsgemäß bevorzugte Glyceride.

CLA steht als Abkürzung für konjugierte Linolsäure (Englisch: conjugated linoleic acid), also für eine Octadecadiensäure, wobei die beiden Doppelbindungen nicht durch eines oder mehrere gesättigte C-Atome getrennt sind, sondern an den C-Atomen Nr. n und n+2 beginnen (n ist eine natürliche Zahl von 2 bis 15). Bevorzugt liegen die Doppelbindungen entweder an den Positionen 9 und 11 (9,11-Octadecadiensäure) oder an den Positionen 10 und 12 (10,12-Octadecadiensäure). Dabei ist an jeder Doppelbindung cis-trans-Isomerie (E-Z-Isomerie) möglich. Die für CLA möglichen Isomere werden durch die angaben c für cis und t für trans und durch Zahlenangaben für die Position der Doppelbindungen bezeichnet, also z. B. c9,t11-CLA. In einer bevorzugten Ausführungsform der vorliegenden Erfindung liegt CLA als c9,t11-CLA oder als t10,c12-CLA vor.

Die erfindungsgemäße Zusammensetzung hat zahlreiche Vorteile gegenüber dem Stand der Technik. Die erfindungsgemäße Zusammensetzung muss keine Alkohole enthalten. Sie muss kein Glycerinmonooleat; dies ist in manchen Fällen vorteilhaft, weil Glycerinmonooleat in manchen Fällen zur Bildung von β-Phasen neigt, die sich in Formulierungen als ungewollte Niederschläge bemerkbar machen können. Zu β-Phasen bei Glycerinmonooleat siehe "Emulgatoren für Lebensmittel", herausgegeben von Gregor Schuster, Springer-Verlag, 1985, Seiten 82 bis 87.

Sämtliche Beispielformulierungen in WO 94/22321 enthalten das Catechin lediglich in einer Konzentration von 2,7 Gew.-%. Die erfindungsgemäßen Zusammensetzungen, können einen bis zu ca. viermal höheren Catechingehalt haben. Das heißt, man bringt auch ca. viermal weniger (oft ungewollte) Hilfsstoffe in die Endformulierung ein (bei vergleichbaren Catechinkonzentrationen in der Endformulierunng). Zudem sind die erfindungsgemäßen Zusammensetzungen in der Wahl des Glycerids (Hilfsöl) in gewissem Maße flexibel. Als solches kann z.B. Fischöl eingesetzt werden. So kann der Eintrag an Hilfsstoffen in die Endformulierung noch weiter herabgesetzt werden.

Die erfindungsgemäße Zusammensetzung zeigt eine wesentlich bessere antioxidative Wirkung als übliche Antioxidantien. Die sehr gute antioxidative Wirkung führt zu einer verbesserten Langzeitstabilität und einer besseren sensorischen Stabilität der stabilisierten Produkte.

Die mit der erfindungsgemäßen Zusammensetzung stabilisierten Produkte haben gute sensorische Eigenschaften. So weisen sie z. B. keinen unangenehmen, bitteren Geschmack auf, wie dies bei z. B. bei dem Emulgator Polysorbat 60 (kommerziell erhältlich als Tween 60) der Fall ist.

Die erfindungsgemäße Zusammensetzung benötigt keine Alkohole und läßt sich sowohl mit Wasser als auch ohne Wasser formulieren. Die wasserhaltigen Konzentrate ergeben dann nach Lösen in Öl bevorzugt eine W/O-Mikroemulsion. Die antioxidative Wirkung der erfindungsgemäßen Zusammensetzung übertrifft die der üblichen öllöslichen Antioxidationsmittel bei vergleichbarer Konzentration um ein Vielfaches. Dies wird durch die für ungesättigte Öle üblichen Stabilitätstests wie Rancimat-Test und Bestimmung der PeroxidZahl bestätigt.

Die erfindungsgemäße Zusammensetzung lässt sich in unterschiedlichste Triglyceride wie z.B. Fischöle, Sonnenblumenöl, konjugierte Linolsäuren und mittelkettige Triglyceride einarbeiten, was ihren Einsatz in zahlreichen Lebensmittel und Nahrungsergänzungsmittel ermöglicht.

Die erhaltenen Lösungen zeigen in der Regel entweder keine zusätzliche Trübung oder, bei höheren Konzentrationen, eine leichte zusätzliche Trübung des Öles (gegenüber dem Öl ohne erfindungsgemäße Zusammensetzung).

Schematisch und an einer beispielhaften Formulierung erläutert kann die Herstellung und Einbringung der erfindungsgemäße Zusammensetzung in lipophile Medien, die gegen Oxidation geschützt werden sollen, wie folgt erfolgen: Lösen z. B. eines Grün-Tee-Extraktes in Wasser; Glycerinmonoleat und Weinsäurester werden unter Rühren erhitzt (50 °C); die Grün-Tee-Extrakt / Wasser - Mischung wird in die Glycerinmonooleat/Weinsäureester - Mischung eingerührt, danach wird ein kurzkettiges Triglycerid zudosiert. Das enthaltene Wasser kann bei Bedarf entzogen werden (z.B. durch Gefriertrocknung). Die erfindungsgemäße Zusammensetzung wird (bevorzugt ohne Erhitzen) in die entsprechende Ölphase oder Fettphase eingerührt. Die Menge der eingerührten Zusammensetzung richtet sich nach der Verwendung. Dient die Zusammensetzung hauptsächlich als Antioxidationsmittel, so wird die Menge derart berechnet, dass die Konzentration der Zusammensetzung in der finalen Ölformulierung oder Fettformulierung im Bereich 500 - 1000 ppm liegt (grober Richtwert). Bei anderen Verwendungen liegen die Konzentrationen entsprechend höher.

Die erfindungsgemäße Zusammensetzung enthält als Hilfsstoffe zur Solubilisierung eine Mischung aus hydrophilen und hydrophoben Emulgatoren und vorzugsweise noch ein Hilfsöl. Der hydrophile Emulgator ist bevorzugt der Weinsäureester von Mono- und Diglyceriden, der hydrophobe Emulgator bevorzugt Glycerinmonooleat. Als Hilfsöl dient bevorzugt mittelkettiges Triglycerid (C8/C10 - Triglycerid).

Zur Herstellung der erfindungsgemäßen Zusammensetzung wird zunächst vorzugsweise ein wasserhaltiges Konzentrat hergestellt, da dieses eine bessere Aufnahmefähigkeit für die erste Komponente hat als das entsprechende wasserfreie Gemisch. Das Wasser kann dann bei Bedarf wieder entzogen werden (z.B. durch Gefriertrocknung). Speziell die wasserfreien Konzentrate neigen dazu, sich klar in Öl zu lösen.

Typische, beispielhafte Zusammensetzungen enthalten die Komponenten in folgenden Mengenbereichen (alle Angaben in Massenprozent):

| | |
|---|---|
| Grün-Tee-Extrakt (enthält ca. 70 % Catechine) | 5 - 20% |
| Glycerinmonoleat | 10 - 35 |
| Weinsäureester | 10 - 35% |
| C8/C10 - Triglycerid | 10 - 50% |
| Wasser | 0 - 10% |

Die erfindungsgemäßen Zusammensetzungen werden bevorzugt in solchen Konzentrationen in die zweiten Zusammensetzungen eingebracht, dass die erste Komponente der erfindungsgemäßen Zusammensetzung bezogen auf das Öl oder Fett in der zweiten Zusammensetzung in einer Konzentration von 20 bis 1000 ppm, bevorzugt 30 - 500 ppm, besonders bevorzugt 30 - 300 ppm vorliegt.

Bei der zweiten Zusammensetzung kann es sich insbesondere um ein Lebensmittel handeln.

### Beispiele

In den Beispielen wurden Markenprodukte verwendet, die alle von der Cognis GmbH, Monheim in Deutschland erhalten wurden, wenn nichts anderes angegeben ist. Die folgende Tabelle stellt den Markennamen und die chemische Zusammensetzung der verwendeten Produkte gegenüber.

| **Marke** | **Chemische Zusammensetzung** |
|---|---|
| Polymuls^{®} PGPR | ein Polyglycerolpolyricinoleat |
| Polymuls^{®} 2G | ein Polyglycerolfettsäureester |
| Monomuls^{®} 90-018 | Glycerinmonooleat |
| Delios^{®} V | Ein Triglycerid, dessen Fettsäuren überwiegend 8 oder 10 C-Atome haben |
| Lamegin^{®} DWP 2000 | Ein Emulgator, der zu den so genannten DATEM gehört (abgeleitete vom Englischen diacetyl tartaric acid ester monoglycerides); Es handelt sich um ein Stoffgemisch, das Glycerinmoleküle enthält, die an mindestens zwei OH-Gruppen verestert sind, und die mindestens einen Fettsäurerest tragen (Kettenlänge der Fettsäurereste: überwiegend 16 und 18 C-Atome), und die mindestens einen Weinsäurerest tragen, der wiederum einfach oder zweifach acetyliert ist. |
| Coviox^{®} T 90 EU | Natürliche Tocopherole |
| Hi Cap 100 | Sogenannte OSA-Stärke (Englisch: 1-octenyl succinic anhydride-esterified starch) |

Alle %-Angaben in den Beispielen sind Gew.-%, wenn nichts anderes angegeben ist.

Die folgenden Zusammensetzungen wurden hergestellt:

| **Nr.** | **Erste Komponente** | **Glycerid** | **Hydrophiler Emulgator** | **Hydrophober Emulgator** |
|---|---|---|---|---|
| **1** | Catechin-Lösung (72,73 % Green Tea Pulver + 27,27 % Wasser): 12,5 % | 37,5 % Delios^{®} V | 25 % Lamegin^{®} DWP 2000 | 25 % Monomuls^{®} 90-018 |
| **2** | dito: 20 % | 30 % Delios^{®} V | 25 % Lamegin^{®} DWP 2000 | 25 % Monomuls^{®} 90-018 |
| **3** | dito: 20 % | 30 % Delios^{®} V | 25 % Lamegin^{®} DWP 2000 | 22,73 % Polymuls^{®} PGPR und 2,27 % Polymuls^{®} 2G |
| **4** | dito: 20 % | 30 % Delios^{®} V | 25 % Lamegin^{®} DWP 2000 | 25 % Polymuls^{®} PGPR |
| **5** * | 9,1 % Green Tea Low Caffein Dry Extract (enthielt ca. 70 % Catechine) | 37,5 % Delios^{®} V | 25% Lamegin^{®} DWP 2000 | 25 % Monomuls^{®} 90-018 |
| **6** * | 9,4 % Green Tea Low Caffein Dry Extract (enthielt ca. 70 % Catechine) | 38,8 % Delios^{®} V | 25,9 % Lamegin^{®} DWP 2000 | 25,9 % Monomuls^{®} 90-018 |

| | | | | |
|---|---|---|---|---|
| * Zusammensetzung Nr. 6 wurde durch Entfernen des Wassers aus Zusammensetzung Nr. 5 erhalten. Zusammensetzung Nr. 5 enthielt 3,4 % Wasser. | | | | |

### Herstellung einer Polyphenolmischung basierend auf Catechin

25 g Monomuls^{®} 90-018 und 25 g Lamegin^{®} DWP 2000 wurden auf ca. 50 °C erwärmt und unter Rühren gemischt und aufgeschmolzen. Anschließend wurden 12,5 g einer Catechin-Mischung bestehend aus "Green Tea Low Caffeine Dry Extrakt" (Koffein: 0,33 %; Epigallocatechingallat: 42,7 %; Catechine insgesamt: 70,46 %) und Wasser in die Emulgator-Vormischung eingerührt. Nach homogener Verteilung wurden 37,5 g MCT (Delios^{®} V) zudosiert. Anschließend wurde das Wasser durch Gefriertrocknung entfernt.

### Herstellung des catechinhaltigen Fischöls

Die oben beschriebene Polyphenolmischung basierend auf Catechin wurde in Fischöl eingerührt:
- 0,76 g der Polyphenolmischung basierend auf Catechin in 99,24 g Fischöl 18/12: Konzentration also 500 ppm
- 1,52 g der Polyphenolmischung basierend auf Catechin in 98,48 g Fischöl 18/12 Konzentration also 1000 ppm

### Fischöl 18/12 ist Fischöl enthaltend 18 % EPA (Eicosapentaensäure) und 12 % DHA (Docosahexaensäure)

Die unten stehende Tabelle verdeutlicht die stabilisierende Wirkung des Catechins im Vergleich zu herkömmlich Antioxidantien und deren Mischungen anhand der mit dem Rancimeter ermittelten Induktionsperioden (als Maß für oxidative Stabilität).

Rancimat-Methode zur Messung der Oxidationsstabilität:
Bei der Rancimat-Methode wird die Probe bei Temperaturen von 50-220 °C einem Luftstrom ausgesetzt. Die leichtflüchtigen Oxidationsprodukte (zum größten Teil Ameisensäure) werden mit dem Luftstrom in das Messgefäß transferiert und dort in der Messlösung (dest. Wasser) absorbiert. Bei der kontinuierlichen Aufzeichnung der Leitfähigkeit dieser Messlösung erhält man Oxidationskurven, deren Knickpunkt als Induktionszeit bezeichnet wird und eine gute Kenngröße für die Oxidationsstabilität darstellt. Die Rancimat-Methode wurde als automatisierte Variante der extrem aufwändigen AOM (active oxygen method) zur Bestimmung der Induktionszeit von Fetten und Ölen entwickelt. Im Laufe der Zeit hat sich die Methode etabliert und Eingang in verschiedene nationale und internationale Normen gefunden, zum Beispiel AOCS Cd 12b-92 und ISO 6886.

**Tabelle: Rancimat-Test des Fischöls 18/12**

| **Antioxidans** | **Induktionsperiode** |
|---|---|
| Nicht stabilisiert | 1,08 h |
| 4400 ppm Coviox^{®} T 90 EU | 2,50 h |
| 4400 ppm Coviox^{®} T 90 EU + 500 ppm Ascorbylpalmitat | 4.30 h |
| 500 ppm Catechin | 10,8 h |
| 1000 ppm Catechin | 16,0 h |

Bedingungen: 5 g bei 120 °C mit 20 1 Luft pro Stunde

### Herstellung eines catechinhaltigen Fischölpulvers

Die oben beschriebene Catechinmischung wurde in entsprechender Menge in das Fischöl eingerührt. Das catechinhaltige Öl wurde mit der Wasserphase und entsprechenden Mengen Emulgierhilfsstoffen vermischt und homogenisiert.
Die entstandene Emulsion wurde dann durch einen geeigneten Prozess (z.B. Sprühtrocknung) vom Wasser befreit, so dass man zu einem Pulver/Granulat gelangte.

### Beispiel einer Formulierung vor Entfernung des Wassers

| | Masse / g |
|---|---|
| Fischöl 18/12 | 50,00 |
| Na Caseinat | 10,00 |
| Glucose DE 29 | 24,00 |
| Hi Cap 100 | 6,00 |
| Sojaprotein | 10,00 |
| Antioxidans Catechin (1000 ppm Catechin auf Öl) | |
| Wasser | 150,0 |

### Anwendungen des catechinhaltigen Fischöl-Pulvers in Milchprodukten

### Einarbeitung von 2,67 g des obigen Pulvers in 150 ml Milch (optional mit nachfolgender Pasteurisierung)

Einarbeitung non 2,67 g des obigen Pulvers in 150 ml Joghurt. Die Einarbeitung kann
a) durch Verwendung der oben genannten fischölhaltigen Milch erfolgen, die dann durch einen entsprechenden Fermentationsprozess zu einem Joghurt verarbeitet wird oder
b) durch Zugabe des Pulvers direkt in das Joghurt oder über die Fruchtphase in ein Joghurt.

### Anwendung eines Polyphenole enthaltenden Fischöl-Pulvers in einem Riegel

Beispielrezeptur eines fischölhaltigen Cerealien-Riegels. Fischöl bzw. Fischöl-Pulver enthielten die in obigen Beispielen genannten Mengen an Catechin.

| Zusammensetzung | [%] |
|---|---|
| Fischöl-Pulver (15% PUFA) | 1,90 |
| Zucker | 12.15 |
| GlukosesirupFeststoff | 18.90 |
| Sorbit (Pulver) | 2.70 |
| Wasser | 11.25 |
| Sonnenblumenöl | 4.85 |
| Lecithin (flüssig) | 0.15 |
| Cornflakes | 19.90 |
| Haferflocken | 8.10 |
| Weizenflocken | 8.10 |
| Rosinen (Sultaninen) | 10.50 |
| Bananenchips | 1.20 |
| Apfelstücke | 0.30 |
| Total | 100.00 |

### Herstellung des Riegels:

Schritt 1: Herstellung der Sirup-Mischung:
   Mische 12,5 g Zucker, 18,9 g Glukosesirup, 2,7 g Sorbitan-Pulver und 11,25 g Wasser und erhitze auf ca. 60 °C
Schritt 2: Herstellung der Fett-Mischung:
   Mische 4,85 g Sonnenblumenöl und 0,15 g Lecithin und erhitze auf ca. 60 °C
Schritt 3: Füge die Fett-Mischung der Sirup-Mischung zu und erhitze auf 90-95 °C
Schritt 4: Herstellung der Cerealien-Mischung:
   Mische 1,90 g Fischöl-Pulver mit den Cerealien und optional mit weiteren Bestandteilen (wie Geschmackstoffe/Aromastoffe, Vitamine, Mineralien). Alternativ kann das Fischöl (Pulver oder Öl) direkt zur Fett-Mischung gegeben werden.
Schritt 5: Füge die Cerealien-Mischung zu der Sirup-Mischung
Schritt 6: Zuführung zum Rollenkompaktor
Schritt 7: Abkühlen und Zuschneiden von der Riegel

### Weitere Beispiele

### % bedeutet stets Gew.-%.

Die folgenden weiteren Beispiele betreffen mit Phenolen und/oder Polyphenolen stabilisierte PUFA-Emulsionen (PUFA = polyunsaturated fatty acid). Es handelt sich um Wasser in Öl Emulsionen von PUFA-haltigen Ölen oder Fetten, z. B. Fischöl.

Diese Emulsionen zeigen deutlich bessere sensorische Eigenschaften und oxidative Stabilität als herkömmlich stabilisierte, auch nach thermischer Belastung wie z. B. Pasteurisieren.

Es wird mit Hilfe eines Hochdruckhomogenisators und Emulgierhilfsmittel (Emulgatoren) eine o/w-Emulsion hergestellt. Die öllöslichen Komponenten werden hierzu in der Ölphase vorgelegt, die wasserlöslichen in der Wasserphase. Ein Aufheizen der Phasen kann den Lösungsprozess beschleunigen. Die beiden Phasen werden vereinigt und mit dem Homogenisator homogenisiert. Die Zugabe der Phenole/Polyphenole erfolgt je nach ihrer Löslichkeit entweder zur Wasser- oder zur Ölphase. Handelt es sich um Carnosolsäure erfolgt die Zugabe über die Ölphase, handelt es sich um Catechin erfolgt die Zugabe über die Wasserphase oder, wenn das Catechin entsprechend vorformuliert wurde, auch über die Ölphase.

Eine typische Formulierung ist die Folgende:
- 40 - 60 % Fischöl (Omevital^{®} 18/12 TG Gold, erhältlich von der Cognis GmbH, Monheim, Deutschland)
- 0,5 - 10 % Modifizierte Stärke (Hi-Cap 100, erhältlich von National Starch)
- 0,5 - 10 % Molkeproteinhydrolysat
- pH-Regulatoren wie Milchsäure und/oder Zitronensäure
- Gehalt an Phenole/Polyphenole (inkl. der entsprechenden Ester) von 20 - 1000 ppm, bevorzugt 30 - 500 ppm, besonders bevorzugt 30 - 300 ppm, bezogen auf die Ölphase bzw. Wasserphase
- Rest: Wasser

Eine weitere typische Formulierung ist die Folgende:
- 40 - 60 % Fischöl (Omevital^{®} 18/12 TG Gold, Cognis)
- 0,5 - 10 % Sucrose Ester (Sisterna SP 70, Sisterna)
- 0,5 - 10 % Lecithin (Rapslecithin)
- 0 - 10 % Molkeproteinhydrolysat
- pH-Regulatoren wie Milchsäure und/oder Zitronensäure bevorzugt
- Gehalt an Phenole/Polyphenole (inkl. der entsprechenden Ester) von 20 - 1000 ppm, bevorzugt 30 - 500 ppm, besonders bevorzugt 30 - 300 ppm, bezogen auf die Ölphase bzw. Wasserphase
- Rest: Wasser

Die Viskosität der Emulsionen liegt bei unter 5000 mPas, bevorzugt unter 3000 mPas, besonders bevorzugt unter 1500 mPas.

Ein trainiertes Test-Panel bewertete die mit Phenolen/Polyphenolen stabilisierten PUFA-Emulsionen gegenüber nicht-stabilisierten Emulsionen oder auf herkömmlichen Weg stabilisierte Emulsionen als überlegen.

Vorteil: Hohe sensorische und oxidative Stabilität. Auch nach thermischer Belastung wie Pasteurisieren.

Diese Emulsionen können in folgenden Lebensmittelmatrices eingesetzt werden:
- Molkereiprodukte (Milch, Joghurt, Trinkjoghurt, Käse usw.)
- Getränke allgemein
- auf Milch basierende Fruchtgetränke und Erfrischungsgetränke
- auf Soja basierende Fruchtgetränke und Erfrischungsgetränke
- Flüssige Nahrungsergänzungsmittel

Diese Emulsionen können wie folgt hergestellt werden:
- VE-Wasser in Rührapparaturen vorlegen
- Emulgator HI-CAP bei RT einrühren
- Aufheizen, auf 80 - 85 °C (Dauer 10 min), bei ca. 60 °C Molkenproteinkonzentrat zugeben
- 10 min halten (Erhitzungsschritt)
- Abkühlen auf 15 - 20 °C (Dauer 15 min)
- Antioxidant in Teilmenge Fischöl bzw. Wasser lösen, zugegeben
- Fischöl zugeben
- mit Zitronensäure wasserfrei pH 4,0 einstellen
- 5 min gerührt (Emulgieren)
- 1 x bei Druck 230/30 bar homogenisiert,
- Viskosität: 240 mPas
- Pasteurisieren (optional)
- Emulsion von Versuch 1 in 100 ml Vierkantflaschen im Wasserbad aufgeheizt auf 80 °C, Dauer ca. 15 min
- 5 min weiter geheitzt, 85 °C
- Flaschen aus Wasserbad genommen, umgedreht in den Kühlschrank gestellt
- Viskosität: 210 mPas (pasteurisiert)

Weitere Rezepturbeispiele:

| A | |
|---|---|
| 500 g | Omevital^{®} 18/12 TG Gold |
| 30 g | modifizierte Stärke HI-CAP 100 |
| 450 g | Wasser |
| 20 g | Molkenproteinhydrolysat |
| 2 g | Zitronensäure wasserfrei |
| 125 mg | Catechin ( = 250 ppm auf Wasserphase) |

| B | |
|---|---|
| 500 g | Omevital^{®} 18/12 TG Gold |
| 30 g | modifizierte Stärke HI-CAP 100 |
| 450 g | Wasser |
| 20 g | Molkenproteinhydrolysat |
| 2 g | Zitronensäure wasserfrei |
| 125 mg | Carnosolsäure ( = 250 ppm auf Ölphase) |

| C | |
|---|---|
| 500 g | Omevital^{®} 18/12 TG Gold |
| 30 g | modifizierte Stärke HI-CAP 100 |
| 450 g | Wasser |
| 20 g | Molkenproteinhydrolysat |
| 2 g | Zitronensäure wasserfrei |
| 62,5 mg | Catechin ( = 125 ppm auf Wasserphase) |
| 62,5 mg | Carnosolsäure ( = 125 ppm auf Ölphase) |

### Beispiel D: Anwendung der Emulsion in Milch

1 g Emulsion aus obigen Beispiel wir zu 99 g Milch (Fettgehalt 1,5 %) unter Rühren zugegeben. Optional kann danach eine Pasteurisierung erfolgen.

### Beispiel C: Anwendung der Emulsion in Joghurt

Das Produkt gemäß Bsp. A wurde gemäß Bsp. D in Milch gegeben. Nach Homogenisierung bei 200 bar wurde die Milch auf 45 °C abgekühlt. 50 g Bakterienstartkultur für Joghurt (YC 180 von Chr. Hansen) wurde zu 450 g der Milchdispersion gegeben. Zur Fermentierung wurden verschiedene Proben in einen Inkubator bei 45 °C gegeben. Nach Erreichugn eines pH von 4,5 bis 4,6 wurden die Proben abgekühlt, 7 % Zucker wurde unter Rühren zugegeben (zum Erhalten eines gerührten Yoghurts), oder sie wurden bei 80 bis 100 bar homogenisiert (zum Erhalten eines Trinkyoghurts).

## Patentansprüche

1. Eine Zusammensetzung enthaltend
| | |
|---|---|
| 1-20 Gew. % | einer ersten Komponente ausgewählt aus der Gruppe bestehend aus mindestens einem Polyphenol, mindestens einem phenolischen Diterpen und Mischungen beider, |
| 2-70 Gew. % | Glycerid, |
| 3-60 Gew. % | hydrophilen Emulgator, |
| 3-60 Gew. % | hydrophoben Emulgator und |
| 0-30 Gew.% | Wasser |
wobei der hydrophile Emulgator ausgewählt ist aus der Gruppe bestehend aus DATEM, CITREM, LACTEM, ACETEM und einem Zuckerester.

2. Die Zusammensetzung nach Anspruch 1, wobei die erste Komponente ein Catechin oder ein Gemisch von Catechinen ist.

3. Die Zusammensetzung nach Anspruch 1, wobei die erste Komponente Carnosolsäure ist.

4. Die Zusammensetzung nach einem der Ansprüche 1 bis 3, wobei der hydrophile Emulgator ausgewählt ist aus der Gruppe bestehend aus DATEM, CITREM, LACTEM und ACETEM.

5. Die Zusammensetzung nach einem der Ansprüche 1 bis 4, wobei der hydrophile Emulgator ein Zuckerester ist.

6. Die Zusammensetzung nach einem der Ansprüche 1 bis 5, wobei der hydrophobe Emulgator ausgewählt ist aus der Gruppe bestehend aus einem Polyglycerolpolyricinoleat, einem Polyglycerolfettsäureester und Glycerinmonofettssäureester (d. h. einem Monoglycerid; insbesondere einem solchen mit einer Fettsäure mit 10 bis 30 C-Atomen, insbesondere Glycerinmonooleat oder Glycerinmonostearat).

7. Ein Verfahren zur Herstellung der Zusammensetzung nach einem der Ansprüche 1 bis 6 umfassend das Bereitstellen einer Mischung enthaltend den hydrophilen Emulgator und den hydrophoben Emulgator, die Zugabe der ersten Komponenten zu dieser Mischung und danach die Zugabe des Glycerids.

8. Eine Verwendung der Zusammensetzung nach einem der Ansprüche 1 bis 6 als Antioxidans für lipophile Medien.

9. Verwendung nach Anspruch 8, wobei die lipophilen Medien Öl oder Fett enthalten, und wobei das Öl oder Fett ausgewählt ist aus der Gruppe bestehend aus einem Fett oder Öl, das ungesättigte Fettsäurereste enthält, Fischöl, Sonnenblumenöl, Borretschöl, einem Glycerid, das Acylreste der konjugierten Linolsäure enthält, und einem Triglycerid, dessen Acylreste 6 bis 24 C-Atome haben.

10. Verwendung nach einem der Ansprüche 8 oder 9, wobei die lipophilen Medien ÖL-in-Wasser-Emulsionen sind.

11. Verwendung nach einem der Ansprüche 8 oder 9, wobei die lipophilen Medien Pulver oder Granulate sind.

12. Verwendung nach einem der Ansprüche 8 bis 10, wobei die lipophilen Medien Lebensmittel sind.

13. Verwendung nach Anspruch 12, wobei die Lebensmittel ausgewählt sind aus der Gruppe Öl, Fett, Ölivenöl, Butter, Margarine, Milch, Milchprodukt, Käse, Joghurt, Schokoriegel und
Müsliriegel.

14. Verwendung nach Anspruch 12, wobei die Emulsionen der Zusammensetzung nach Ansprüchen 1 bis 6 in Lebensmittelmatrices ausgewählt aus Molkereiprodukten wie Milch, Käse, Joghurt und Trinkjoghurt, Getränken allgemein, auf Milch basierende Frucht- und Erfrischungsgetränken, auf Soja basierenden Frucht- und Erfrischungsgetränken sowie flüssigen Nahrungsergänzungsmitteln eingesetzt werden.

15. Verwendung nach Anspruch 14, wobei die Konzentration der Zusammensetzung in der Öl- oder Fettformulierung im Bereich von 20 bis 1000 ppm liegt.

## Claims

1. A composition containing
1-20% by weight of a first component selected from the group consisting of at least one polyphenol, at least one phenolic diterpene and mixtures of both,
2-70% by weight of glyceride,
3-60% by weight of hydrophilic emulsifier,
3-60% by weight of hydrophobic emulsifier and
0-30% by weight of water,
wherein the hydrophilic emulsifier is selected from the group consisting of DATEM, CITREM, LACTEM, ACETEM and a sugar ester.

2. The composition according to claim 1, wherein the first component is a catechin or a mixture of catechins.

3. The composition according to claim 1, wherein the first component is carnosolic acid.

4. The composition according to any of claims 1 to 3, wherein the hydrophilic emulsifier is selected from the group consisting of DATEM, CITREM, LACTEM and ACETEM.

5. The composition according to any of claims 1 to 4, wherein the hydrophilic emulsifier is a sugar ester.

6. The composition according to any of claims 1 to 5, wherein the hydrophobic emulsifier is selected from the group consisting of a polyglycerol polyricinoleate, a polyglycerol ester of fatty acid and glycerol monoester of fatty acid (i.e. a monoglyceride; in particular such a monoglyceride having a fatty acid having 10 to 30 carbon atoms, in particular glycerol monooleate or glycerol monostearate).

7. A process for producing the composition according to any of claims 1 to 6 which comprises providing a mixture comprising the hydrophilic emulsifier and the hydrophobic emulsifier, adding the first component to this mixture and thereafter adding the glyceride.

8. The use of the composition according to any of claims 1 to 6 as antioxidant for lipophilic media.

9. The use according to claim 8, wherein the lipophilic media comprise oil or fat, and wherein the oil or fat is selected from the group consisting of a fat or oil which comprises unsaturated fatty acid radicals, fish oil, sunflower oil, borage oil, a glyceride which comprises acyl radicals of conjugated linoleic acid, and a triglyceride, the acyl radicals of which have 6 to 24 carbon atoms.

10. The use according to either of claims 8 and 9, wherein the lipophilic media are oil-in-water emulsions.

11. The use according to either of claims 8 and 9, wherein the lipophilic media are powders or granules.

12. The use according to one of claims 8 to 10, wherein the lipophilic media are foods.

13. The use according to claim 12, wherein the foods are selected from the group oil, fat, olive oil, butter, margarine, milk, milk product, cheese, yoghurt, chocolate bars and muesli bars.

14. The use according to claim 12, wherein the emulsions of the composition according to claims 1 to 6 are used in food matrices selected from dairy products such as milk, cheese, yoghurt and drinking yoghurt, drinks in general, milk-based fruit drinks and soft drinks, soy-based fruit drinks and soft drinks, and also liquid food supplements.

15. The use according to claim 14, wherein the concentration of the composition in the oil formulation or fat formulation is in the range from 20 to 1000 ppm.

## Revendications

1. Composition contenant
1-20% en poids d'un premier composant choisi dans le groupe constitué par au moins un polyphénol, au moins un diterpène phénolique et les mélanges des deux,
2-70% en poids de glycéride,
3-60% en poids d'émulsifiant hydrophile,
3-60% en poids d'émulsifiant hydrophobe et
0-30% en poids d'eau
l'émulsifiant hydrophile étant choisi dans le groupe constitué par DATEM, CITREM, LACTEM, ACETEM et un ester de sucre.

2. Composition selon la revendication 1, le premier composant étant une catéchine ou un mélange de catéchines.

3. Composition selon la revendication 1, le premier composant étant l'acide carnosolique.

4. Composition selon l'une quelconque des revendications 1 à 3, l'émulsifiant hydrophile étant choisi dans le groupe constitué par DATEM, CITREM, LACTEM et ACETEM.

5. Composition selon l'une quelconque des revendications 1 à 4, l'émulsifiant hydrophile étant un ester de sucre.

6. Composition selon l'une quelconque des revendications 1 à 5, l'émulsifiant hydrophobe étant choisi dans le groupe constitué par un polyricinoléate de polyglycérol, un ester d'acide gras de polyglycérol et un monoester d'acide gras de glycérol (c'est-à-dire un monoglycéride ; en particulier un monoglycéride avec un acide gras comprenant 10 à 30 atomes de carbone, en particulier le monooléate de glycérol ou le monostéarate de glycérol).

7. Procédé pour la préparation de la composition selon l'une quelconque des revendications 1 à 6 comprenant la mise à disposition d'un mélange contenant l'émulsifiant hydrophile et l'émulsifiant hydrophobe, l'addition du premier composant à ce mélange et ensuite l'addition du glycéride.

8. Utilisation de la composition selon l'une quelconque des revendications 1 à 6 comme antioxydant pour des milieux lipophiles.

9. Utilisation selon la revendication 8, les milieux lipophiles contenant de l'huile ou de la graisse, l'huile ou la graisse étant choisie dans le groupe constitué par une graisse ou une huile qui contient des radicaux d'acide gras insaturé, l'huile de poisson, l'huile de tournesol, l'huile de bourrache, un glycéride, qui contient des radicaux acyle de l'acide linoléique conjugué, et un triglycéride, dont les radicaux acyle comprennent 6 à 24 atomes de carbone.

10. Utilisation selon l'une quelconque des revendications 8 à 9, les milieux lipophiles étant des émulsions huile-dans-eau.

11. Utilisation selon l'une quelconque des revendications 8 à 9, les milieux lipophiles étant des poudres ou des granulats.

12. Utilisation selon l'une quelconque des revendications 8 à 10, les milieux lipophiles étant des aliments.

13. Utilisation selon la revendication 12, les aliments étant choisis dans le groupe constitué par l'huile, la graisse, l'huile d'olive, le beurre, la margarine, le lait, un produit lacté, le fromage, le yaourt, les barres chocolatées et les barres aux céréales.

14. Utilisation selon la revendication 12, les émulsions de la composition selon les revendications 1 à 6 étant utilisées dans des matrices alimentaires choisies parmi les produits de laiterie, tels que le lait, le fromage, le yaourt et le yaourt à boire, les boissons en général, les boissons fruitées et rafraîchissantes à base de lait, les boissons fruitées et rafraîchissantes à base de soja ainsi que les compléments alimentaires liquides.

15. Utilisation selon la revendication 14, la concentration de la composition dans la formulation d'huile ou de graisse étant située dans la plage de 20 à 1000 ppm.
